# NEUE EUROPÄISCHE PATENTSCHRIFT

(11) **EP 1 614 573 B2**
(45) Veröffentlichungstag und Bekanntmachung des Hinweises auf die Entscheidung über den Einspruch: **04.09.2013**
(45) Hinweis auf die Patenterteilung: 22.08.2007
(21) Anmeldenummer: 05007181.0
(22) Anmeldetag: 01.04.2005
(51) Int. Cl.: B60J 7/22

(54) **Windstopeinrichtung**
Wind deflector device
Système déflecteur de vent

(30) Priorität: 29.06.2004 DE 102004032380
(43) Veröffentlichungstag der Anmeldung: 11.01.2006
(73) Patentinhaber: SCAMBIA Industrial Developments Aktiengesellschaft, 9494 Schaan (LI)
(72) Erfinder: Kreis, Robert, 71570 Oppenweiler (DE); Neumann, Peter, 71720 Oberstenfeld (DE); Riehle, Jörg, 71679 Asperg (DE)
(74) Vertreter: Hoeger, Stellrecht & Partner Patentanwälte

(56) Entgegenhaltungen:
- DE-A1- 3 836 375
- DE-A1- 4 018 862
- DE-A1- 10 162 758
- DE-C1- 4 335 103
- US-A- 5 738 404
- US-A- 5 803 530
- US-A1- 2003 085 006

## Beschreibung

Die Erfindung betrifft eine Windstopeinrichtung insbesondere für Cabrio-Fahrzeuge, umfassend ein sich über einer Gürtellinie einer Karosserie erhebendes Windschott und eine mit dem Windschott verbundene Abdeckung für einen bezogen auf eine Fahrtrichtung hinter dem Windschott liegenden Teilbereich einer Fahrgastraumöffnung der Karosserie.

Derartige Windstopeinrichtungen sind aus dem Stand der Technik bekannt, siehe z.B. DE-A-19545405 oder DE-A-10053701. Bei diesen ist zumindest das Windschott entweder so ausgebildet, daß es nicht aus luftdurchlässigem Material ist oder teilweise aus luftdurchlässigem Material.

Aus der EP 0778171 B1 ist eine Windstopeinrichtung für Cabrio-Fahrzeuge bekannt, welche ein sich über einer Gürtellinie einer Karosserie erhebendes Windschott und eine mit dem Windschott verbundene Abdeckung für einen bezogen auf eine Fahrtrichtung hinter dem Windschott liegenden Teilbereich einer Fahrgastraumöffnung der Karosserie umfasst, wobei das Windschott luftdurchlässig ist und die Abdeckung als plattenförmige Abdeckung ausgebildet ist, welche ein Eintreten von Luft in den darunterliegenden Bereich des Fondraums verhindert.

Aus der DE 43 35 103 C1 ist eine ist eine Windstopeinrichtung für Cabrio-Fahrzeuge bekannt, welche ein sich über einer Gürtellinie einer Karosserie erhebendes
Windschott und eine mit dem Windschott verbundene Abdeckung für einen bezogen auf eine Fahrtrichtung hinter dem Windschott liegenden Teilbereich einer Fahrgastöffnung der Karosserie aufweist. Dabei sind das Windschott und die Abdeckung mit Öffnungen versehen, durch die Luft hindurchtreten soll, wobei die Figur eine größere Zahl von symbolisch dargestellten Öffnungen im Windschott als in der Abdeckung zeigt.

Der Erfindung liegt die Aufgabe zugrunde, eine Windstopeinrichtung hinsichtlich ihrer optimalen Wirkung, d.h. der Verhinderung von Zugluft in einem vor dem Windschott liegenden Fahrgastraumbereich, zu verbessern.

Diese Aufgabe wird bei einer Windstopeinrichtung der eingangs beschriebenen Art erfindungsgemäß durch die Merkmale des Anspruchs 1 gelöst.

Der Vorteil dieser erfindungsgemäßen Lösung ist darin zu sehen, daß durch die unterschiedlich große Luftdurchlässigkeit eine optimale Wirkung der Windstopeinrichtung erreichbar ist, insbesondere im Hinblick darauf, daß eine möglichst geringe Luftgeschwindigkeit in einem zwischen einer Windschutzscheibe und dem Windschott liegenden Fahrgastraumbereich auftritt.

Erfindungsgemäß beträgt die Luftdurchlässigkeit des Windschotts mindestens das Doppelte der Luftdurchlässigkeit der Abdeckung beträgt.

Noch besser ist es, wenn die Luftdurchlässigkeit des Windschott mindestens ungefähr das 2,5-fache der Luftdurchlässigkeit der Abdeckung beträgt.

Vorzugsweise ergeben sich jedoch für die Luftdurchlässigkeit des Windschotts relativ zur Luftdurchlässigkeit der Abdeckung auch sinnvolle Obergrenzen.

Erfindungsgemäß ist die Luftdurchlässigkeit des Windschotts kleiner als die vierfache Luftdurchlässigkeit der Abdeckung.

Eine besonders günstige Relation zwischen der Luftdurchlässigkeit des Windschotts und der Luftdurchlässigkeit der Abdeckung liegt dann vor, wenn die Luftdurchlässigkeit des Windschotts ungefähr das Dreifache der Luftdurchlässigkeit der Abdeckung beträgt.

Im Zusammenhang mit den bislang beschriebenen Ausführungsbeispielen wurde somit lediglich Bezug genommen auf die Relation zwischen der Luftdurchlässigkeit des Windschotts und der Luftdurchlässigkeit der Abdeckung. Es wurde jedoch nicht angegeben, in welchem Wertebereich diese Relation liegt.

So hat es sich bei einer Ausführungsform der erfindungsgemäßen Lösung als vorteilhaft erwiesen, wenn die Luftdurchlässigkeit der Abdeckung so groß ist, daß nach der Abdeckung ein Luftstrom mit einer Geschwindigkeit zwischen ungefähr 0,5 m/s und ungefähr 2 m/s bei einer Anströmgeschwindigkeit der Luft von 10 m/s auf die Abdeckung entsteht.

Besonders vorteilhaft ist es, wenn die Luftdurchlässigkeit der Abdeckung so groß ist, daß nach der Abdeckung ein Luftstrom mit einer Geschwindigkeit zwischen ungefähr 0,75 m/s und ungefähr 1,7 m/s bei einer Anströmgeschwindigkeit der Luft von 10 m/s auf die Abdeckung entsteht.

Ein besonders vorteilhafter Wert für die Luftdurchlässigkeit der Abdeckung sieht vor, daß diese so groß ist, daß nach der Abdeckung ein Luftstrom mit einer Geschwindigkeit zwischen ungefähr 1 m/s und ungefähr 1,5 m/s bei einer Anströmgeschwindigkeit der Luft von 10 m/s auf die Abdeckung entsteht.

Bei den bislang beschriebenen Ausführungsbeispielen wurde davon ausgegangen, daß die Luftdurchlässigkeit der Abdeckung als Ganzes oder des Windschotts als Ganzes im wesentlichen homogen über die Fläche derselben ist.

Eine weitere vorteilhafte Ausführungsform sieht jedoch vor, daß die Abdeckung eine in eine quer zur Fahrtrichtung verlaufenden Querrichtung variierende Luftdurchlässigkeit aufweist, das heißt, daß die Luftdurchlässigkeit in allen Flächenbereichen der Abdeckung nicht konstant ist, sondern in der Querrichtung variiert. Eine derartige Möglichkeit der Variation der Luftdurchlässigkeit in der Querrichtung eröffnet weitere Abstimmungsparameter zur optimalen Abstimmung der Luftverhältnisse im Fahrgastraumbereich, insbesondere um die Luftströmung in der Querrichtung innerhalb des Fahrgastraumbereichs im wesentlichen konstant halten zu können.

Dabei kann die Luftdurchlässigkeit in unterschiedlichster Art und Weise variieren.

Besonders vorteilhaft ist es jedoch, wenn die Luftdurchlässigkeit symmetrisch zu einer in Fahrtrichtung verlaufenden Längsmittelebene variiert, das heißt beiderseits der Längsmittelebene in gleicher Weise variiert, so daß für Fahrer und Beifahrer im wesentlichen dieselben Luftverhältnisse erreichbar sind.

Eine konstruktiv besonders einfache Ausführungsform sieht vor, daß die Luftdurchlässigkeit in einem Innenbereich der Abdeckung, der sich beispielsweise an die Längsmittelebene anschließt, anders ist als in außerhalb des Innenbereichs liegenden Außenbereichen der Abdeckung.

Eine derartige Variation kann dabei graduell oder sprunghaft erfolgen, einfach dadurch, daß der Innenbereich eine andere Luftdurchlässigkeit pro Fläche aufweist als der Außenbereich.

Als besonders günstig hat es sich erwiesen, wenn die Luftdurchlässigkeit in dem Innenbereich geringer ist als in dem Außenbereich der Abdeckung.

Darüber hinaus läßt sich zweckmäßigerweise auch die Luftdurchlässigkeit im Bereich des Windschotts in der Querrichtung variieren.

So sieht eine vorteilhafte Lösung vor, daß das Windschott eine in einer quer zur Fahrtrichtung verlaufenden Querrichtung variierende Luftdurchlässigkeit aufweist, so daß auch in dem Windschott, das quer zur Abdeckung über die Gürtellinie der Karosserie übersteht, durch Variation der Luftdurchlässigkeit eine optimale Abstimmung an die Strömungsverhältnisse der Karosserie erreichen läßt.

Auch diesbezüglich ist es besonders vorteilhaft, wenn die Luftdurchlässigkeit symmetrisch zu einer in Fahrtrichtung verlaufenden Längsmittelebene variiert.

Darüber hinaus läßt sich auch im Bereich des Windschotts die Luftdurchlässigkeit in einfacher Weise dadurch anpassen, daß sie in einem Innenbereich des Windschotts, der sich beispielsweise an die Längsmittelebene anschließt, anders ist als in einem außerhalb des Innenbereichs liegenden Außenbereich des Windschotts.

Besonders einfach läßt sich eine derartige Variation dann realisieren, wenn die Luftdurchlässigkeit in dem Innenbereich größer als in dem Außenbereich des Windschotts ist.

Hinsichtlich der Ausbildung des Windschotts selbst wurden bislang keine näheren Angaben gemacht.

So könnte das Windschott beispielsweise aus einem plattenförmigen, insbesondere in sich steifen, luftdurchlässigen Material hergestellt sein.

Ein derartiges Windschott kann als rahmenloses Windschott ausgebildet sein.

Eine besonders vorteilhafte Lösung sieht vor, daß das Windschott aus einem Windschottrahmen und einem Windschottrahmeneinsatz ausgebildet ist.

Vorzugsweise ist in diesem Fall der Windschottrahmeneinsatz luftdurchlässig und bewirkt die vorstehend spezifizierte Luftdurchlässigkeit des Windschotts.

Auch der Windschottrahmeneinsatz könnte beispielsweise ein in sich steifes Flachmaterial oder ein Gittermaterial sein.

Eine besonders zweckmäßige Lösung sieht vor, daß der Windschottrahmeneinsatz aus einem biegeschlaffen Flachmaterial ausgebildet ist.

Zweckmäßigerweise ist das biegeschlaffe Flachmaterial in den Windschottrahmen eingespannt und dadurch vom Windschottrahmen in der gewünschten Form gehalten.

Auch die Abdeckung kann rahmenlos ausgeführt sein, beispielsweise durch ein sich steifes luftdurchlässiges Material.

Ferner ist es ebenfalls günstig, wenn die Abdeckung durch mindestens einen Abdeckungsrahmen und einen Abdeckungsrahmeneinsatz gebildet ist.

Hierbei bewirkt ebenfalls der Abdeckungsrahmeneinsatz die gewünschte Luftdurchlässigkeit.

Auch der Abdeckungsrahmeneinsatz könnte beispielsweise aus einem in sich steifen luftdurchlässigen Flachmaterial oder Gitter ausgebildet sein.

Besonders zweckmäßig ist es, wenn der Abdeckungsrahmeneinsatz aus einem biegeschlaffen Flachmaterial ausgebildet ist.

In diesem Fall ist es günstig, daß das biegeschlaffe Flachmaterial in den Abdeckungsrahmen eingespannt ist.

Hinsichtlich der Ausbildung des Windschotts selbst wurden bislang keine näheren Angaben gemacht. So sieht ein vorteilhaftes Ausführungsbeispiel vor, daß das Windschott aus zwei Windschottteilen gebildet ist, die ihrerseits um eine Schwenkachse von einer ausgebreiteten Stellung, in welcher sich das Windschott mit maximaler Ausdehnung in einer Ausbreitungsrichtung erstreckt, in eine zusammenklappbare Stellung bringbar ist, in welcher die beiden Windschottteile im wesentlich aufeinander liegen und daß die Abdeckung durch zwei Abdeckungsteile gebildet ist.

Weitere Merkmale und Vorteile der Erfindung sind Gegenstand der nachfolgenden Beschreibung sowie der zeichnerischen Darstellung einer Ausführungsbeispiels. In der Zeichnung zeigen:
- Figur 1: eine perspektivische Darstellung eines ersten Ausführungsbeispiels einer an einer Karosserie eines Cabrio-Fahrzeugs montierten Windstopeinrichtung mit Blick von einer Vorderseite der Karosserie in Richtung einer Rückseite;
- Figur 2: eine Seitenansicht der Karosserie mit der in Figur 1 dargestellten Windstopeinrichtung und
- Figur 3: eine perspektivische Darstellung ähnlich Figur 1 eines zweiten Ausführungsbeispiels einer Windstopeinrichtung.

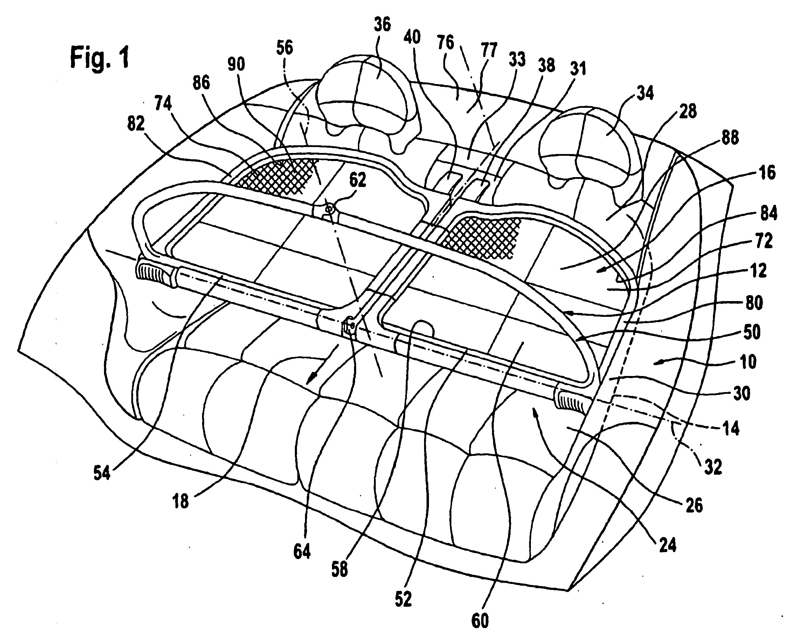

Ein erstes Ausführungsbeispiel einer erfindungsgemäßen Windstopeinrichtung für ein Kraftfahrzeug, insbesondere ein Cabrio-Fahrzeug, dessen Karosserie 10 in Figur 1 ausschnittsweise dargestellt ist, umfaßt ein Windschott 12, welches über eine Gürtellinie 14 der Karosserie 10 des Kraftfahrzeugs nach oben übersteht, sowie eine Abdeckung 16, welche bezogen auf eine Fahrtrichtung 18 einen hinter dem Windschott 12 liegenden Teilbereich 20 einer ungefähr in Höhe der Gürtellinie 14 angeordneten Fahrgastraumöffnung 22 abdeckt. Beispielsweise liegt der Teilbereich 20 der Fahrgastraumöffnung 22 über einer Rücksitzanlage 24, welche eine Sitzbank 26 sowie eine Rücksitzlehne 28 aufweist.

Vorzugsweise schließt dabei der Teilbereich 20 der Fahrgastraumöffnung 22 unmittelbar an der Rücksitzlehne 28 an und erstreckt sich in der Fahrtrichtung 18 bis zum Windschott 12 ebenfalls unter Anschluß an Karosserieseitenwände 30 im Bereich der Gürtellinie 14.

Zweckmäßigerweise sitzt dabei das Windschott 12 so, daß dieses im wesentlichen unmittelbar hinter zeichnerisch in Figur 1 nicht dargestellten Kopfstützen von Vordersitzen des Kraftfahrzeugs angeordnet ist.

Die Abdeckung 16 ist mit dem Windschott 12 vorzugsweise gelenkig, beispielsweise um eine Klappachse 32 verschwenkbar, verbunden und beide gemeinsam sind über zeichnerisch nicht im einzelnen dargestellte Fixiereinrichtungen, die entweder am Windschott 12 oder an der Abdeckung 16 angeordnet sind, im Bereich der Gürtellinie 14 an der Karosserie 10, beispielsweise im Bereich der Karosserieseitenwände 30, fixierbar.

Zusätzlich ist vorteilhafterweise noch eine Fixiereinrichtung 31 für die Abdeckung 16 im Bereich der Rücksitzanlage 24 vorgesehen, beispielsweise in einem mittigen Bereich 33 der Rücksitzlehne 28, zwischen Kopfstützen 34, 36, wobei die Fixierung beispielsweise über von der Abdeckung 16 überstehende Vorsprünge 38, 40 erfolgt.

Das Windschott 12 ist aus einem Windschottrahmen 50 gebildet, welcher zwei Rahmenteile 52 und 54 umfaßt, die um eine Schwenkachse 56, welche beispielsweise eine Mittelachse des Windschottrahmens 50 darstellt, relativ zueinander verschwenkbar sind und somit von einer aufgeklappten Funktionsstellung, in welcher sich der Windschottrahmen 50 mit maximaler Ausdehnung quer zur Fahrtrichtung 18 in Richtung seiner Rahmenfläche erstreckt, in eine Klappstellung bringbar sind, in welcher die Rahmenteile 52, 54 ungefähr aufeinander liegen.

Die beiden Rahmenteile 52 und 54 umschließen gemeinsam eine Rahmenöffnung 58, welche durch einen Windschottrahmeneinsatz 60 verschlossen ist, der bei aufgeklappten und somit in der Funktionsstellung stehenden Rahmenteilen 52, 54 die Rahmenöffnung 58 des Windschottrahmens 50 übergreift.

Der Windschottrahmeneinsatz 60 ist dabei luftdurchlässig, jedoch so ausgebildet, daß er eine schnelle Luftströmung blockiert.

Vorzugsweise sind die Rahmenteile 52, 54 so ausgebildet, daß diese über Scharniere 62, 64 miteinander verbunden sind und sich jeweils C-förmig beiderseits der Schwenkachse 56 erstrecken, so daß in der Funktionsstellung die Rahmenöffnung 58 insgesamt von den C-förmigen Rahmenteilen 52, 54 umschlossen und somit insbesondere im Bereich der Schwenkachse 56 nicht durch Streben geteilt ist.

Die Abdeckung 16 ist ebenfalls aus zwei Abdeckungsteilen 72, 74 gebildet, die im Bereich einer Trennebene 76, in welcher auch die Schwenkachse 56 liegt, voneinander getrennt sind.

Vorzugsweise fällt die Trennebene 78 mit einer Längsmittelebene 77 der Karosserie 10 zusammen und stellt somit auch eine Symmetrieebene der Windstopeinrichtung dar.

Darüber hinaus sind die beiden Abdeckungsteile 72 und 74 oder nur eines derselben gelenkig zum Beispiel um die Klappachse 32 schwenkbar, mit dem Windschott 12 verbunden, um die gesamte Windstopeinrichtung zusammenfalten zu können.

Bei einer Variante der erfindungsgemäßen Windstopeinrichtung erfolgt eine Faltung gemäß der DE-A- 195 45 405, auf welche diesbezüglich vollinhaltlich Bezug genommen wird, wobei bei dieser Art der Faltung beide Abdeckungsteile 72 und 74 gelenkig mit dem Windschott 12, und zwar jeweils mit einem der Rahmenteile 52, 54, verbunden sind, so daß beim Falten derselben ein Schwenken um die Schwenkachse 56 und Zusammenklappen der Rahmenteile 52 und 54 sowie der Abdeckungsteile 72 und 74 erfolgt, und zwar derart, daß die Rahmenteile 52, 54 aufeinander und zwischen den Abdeckungsteilen 72, 74 liegen.

Eine andere Lösung für das Zusammenklappen ist in der DE-A- 100 53 701 beschrieben, auf welche diesbezüglich ebenfalls vollinhaltlich Bezug genommen wird. Bei dieser Lösung sind die Abdeckungsteile 72 und 74 gelenkig miteinander verbunden, jedoch nur eines der Abdeckungsteile 72 oder 74 ist ständig mit einem der Rahmenteile 52 bzw. 54 gelenkig verbunden, so daß jeweils die Abdeckungsteile 72 und 74 und die Rahmenteile 52 und 54 relativ zueinander zusammengeklappt werden können und dann insgesamt die zusammengeklappten Rahmenteile 52, 54 sowie die zusammengeklappten Abdeckungsteile 72, 74 durch Schwenken um die Klappachse 32 zwischen einem der Abdeckungsteile 72, 74 und einem der Rahmenteile 52, 54 aufeinander gelegt werden können.

In Figur 1 dargestellt, umfaßt jedes der Abdeckungsteile 72 und 74 einen Abdeckungsrahmen 80, 82, der an der Karosserie 10 in der beschriebenen Art und Weise fixierbar ist.

Jeder Abdeckungsrahmen 80, 82 umschließt eine Öffnung 84, 86, welche durch einen Abdeckungsrahmeneinsatz 88, 90 verschlossen ist.

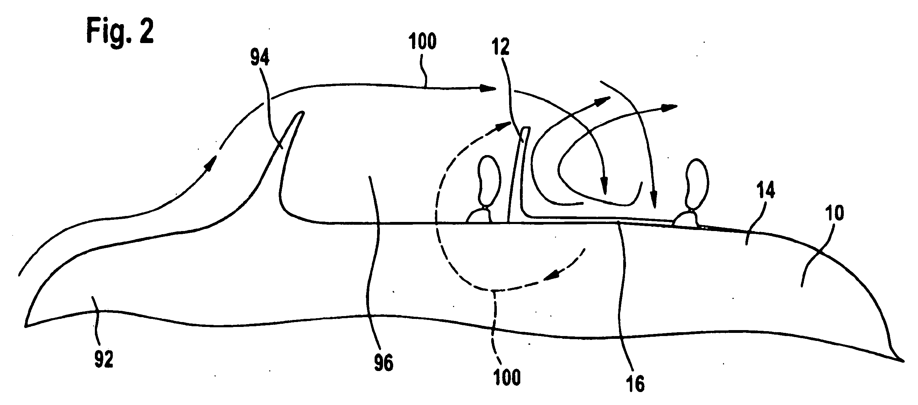

Wie in Figur 2 dargestellt, hat bei einem Cabrio-Fahrzeug die von einer Frontseite 92 und einer Windschutzscheibe 94 über einen vorderen, hinter der Windschutzscheibe 94 liegenden Fahrgastraumbereich 96 angehobene Luftströmung 100 die Tendenz über den vorderen Fahrgastraumbereich 96 und das Windschott 12 hinwegzuströmen, sich jedoch nach dem Windschott 12 in Richtung der Karosserie 10 abzusenken. Dies würde bei einer für die Luftströmung 100 durchlässigen Abdeckung 16 zur Folge haben, daß die Luftströmung 100 die Abdeckung 16 durchsetzen würde, und von der Rücksitzanlage 24 in Richtung des Fahrgastraumbereichs 96 strömen und dann aus diesem wieder über das Windschott 12 hinwegströmen würde, so daß die bereits erwähnten Zugerscheinungen im Fahrgastraumbereich 96 auftreten würden.

Andererseits hätte ein komplett luftundurchlässiger Verschluß der Rahmenöffnung 58 sowie der Öffnungen 84, 86 der Abdeckungsrahmen 82, 84 zur Folge, daß im Fahrgastraumbereich 96 zwischen der Frontscheibe und dem Windschott 12 aufgrund der Luftströmung 100 ein Unterdruck entstehen würde, der wiederum zu einem Eintreten von Luft aus der Umgebung in den Fahrgastraum 96, insbesondere im seitlichen Bereich zwischen der Windschutzscheibe 94 und dem Windschott 12, führen würde, so daß mindestens in seitlichen Außenbereichen des Fahrgastraumbereichs 96 ebenfalls die unerwünschten Zugerscheinungen durch Luftströmungen auftreten würden.

Aus diesem Grund sind sowohl der Windschottrahmeneinsatz 60 sowie die Abdeckungsrahmeneinsätze 88, 90 aus einem teilweise luftdurchlässigen Material hergestellt, und zwar derart, daß die Luftdurchlässigkeit des Windschottrahmeneinsatzes 60 um mindestens das Doppelte, maximal das Vierfache größer ist als die Luftdurchlässigkeit der Abdeckungsrahmeneinsätze 88, 90.

Die Abdeckungsrahmeneinsätze 88, 90 haben eine Luftdurchlässigkeit, die größer Null ist, um die Ausbildung eines Unterdrucks im Fahrgastraumbereich 96 zu verhindern und der Windschottrahmeneinsatz 60 hat eine Luftdurchlässigkeit, die mindestens das Doppelte der Luftdurchlässigkeit der Abdeckungsrahmeneinsätze 88, 90 beträgt.

Damit werden einerseits Luftströmungen im Fahrgastraumbereich 96 zwischen der Windschutzscheibe 94 und dem Windschott 12 weitgehend unterdrückt, andererseits wird die bereits beschriebene Bildung eines Unterdrucks im Fahrgastraumbereich 96 vermieden.

Die Luftdurchlässigkeit des Windschottrahmeneinsatzes 60 beträgt mindestens das Doppelte der Luftdurchlässigkeit des Abdeckungsrahmeneinsatzes 88, 90.

Die Luftdurchlässigkeit des Windschottrahmeneinsatzes 60 beträgt maximal das Vierfache der Luftdurchlässigkeit des Abdeckungsrahmeneinsatzes 88, 90.

Eine besonders günstige Relation ist dann erreichbar, wenn die Luftdurchlässigkeit des Windschottrahmeneinsatzes 60 ungefähr das Dreifache der Luftdurchlässigkeit des Abdeckungsrahmeneinsatzes 88, 90 beträgt.

Zweckmäßig für die Luftdurchlässigkeit des Abdeckungsrahmeneinsatzes 88, 90 ist eine Luftdurchlässigkeit zwischen ungefähr 1 und ungefähr 1,5 m/s bei einer Anströmgeschwindigkeit von 10 m/s und zwischen ungefähr 1,5 m/s und ungefähr 2 m/s bei 15 m/s Anströmungsgeschwindigkeit.

Der Beschattungsgrad eines derartigen Abdeckungsrahmeneinsatzes mit der genannten Luftdurchlässigkeit liegt zwischen ungefähr 90 und 96 %.

Vorzugsweise sind sowohl der Windschottrahmeneinsatz 60 als auch die Abdeckungsrahmeneinsätze 88, 90 aus biegeschlaffen Flachmaterialien hergestellt, welche in den Windschottrahmen 50 bzw. in die Abdeckungsrahmen 80, 82 eingespannt sind.

Bei der erfindungsgemäßen Lösung ist unter der Luftdurchlässigkeit des Windschottrahmeneinsatzes 60 der Mittelwert über den gesamten Windschottrahmeneinsatz 60 zu verstehen und unter der Luftdurchlässigkeit der Abdeckungsrahmeneinsätze 88, 90 der Mittelwert über die gesamten Abdeckungsrahmeneinsätze 88, 90.

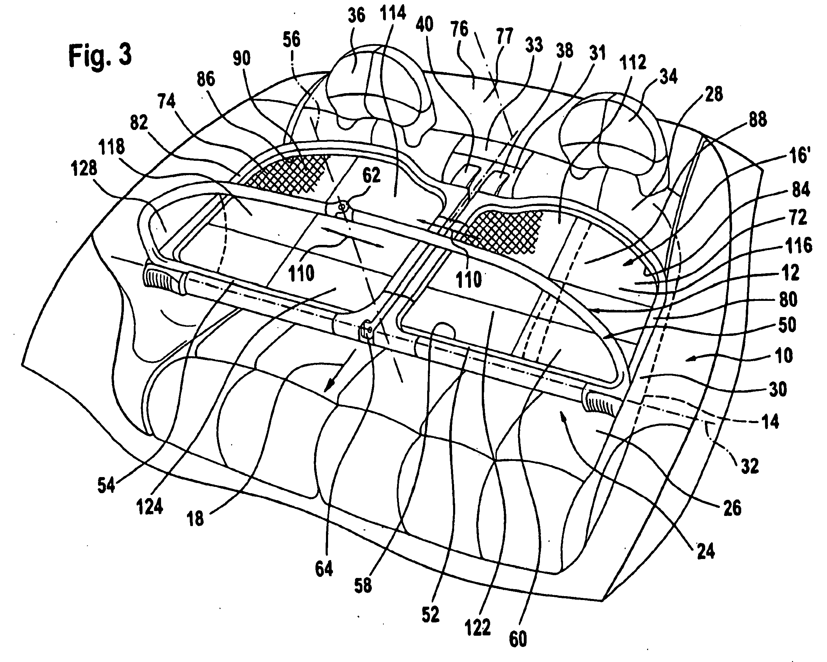

Bei einem zweiten Ausführungsbeispiel einer erfindungsgemäßen Windstopeinrichtung, dargestellt in Fig. 3, ist die Abdeckung 16' in einer quer, vorzugsweise senkrecht zur Längsmittelebene 77 oder zur Trennebene 76 verlaufenden Querrichtung 110, mit einer variierenden Luftdurchlässigkeit pro Flächeneinheit ausgebildet, das heißt, daß die Luftdurchlässigkeit der Abdeckungsrahmeneinsätze 88 und 90 in der Querrichtung 110 variiert.

Beispielsweise ist jeweils in unmittelbar beiderseits der Trennebene 76 oder Längsmittelebene 77 liegenden Innenbereichen 112 und 114 der Abdeckungsrahmeneinsätze 88 und 90 die Luftdurchlässigkeit geringer als in sich an diese Innenbereiche 112, 114 auf einer der Trennebene 76 oder der Längsmittelebene 77 gegenüberliegenden Seite anschließenden Außenbereichen 116, 118 der Abdeckungsrahmeneinsätze.

Durch eine derartige, in der Querrichtung variierende Luftdurchlässigkeit lassen sich in besonders vorteilhafterweise die Verhältnisse im Fahrgastraumbereich 96 ebenfalls in der Querrichtung 110 abstimmen, um unangenehme Zugerscheinungen in dem Fahrgastraumbereich 96 vor dem Windschott 12 zu vermeiden.

Darüber hinaus besteht auch die Möglichkeit, den im Windschottrahmeneinsatz 60 in der Querrichtung 110 mit einer variierenden Luftdurchlässigkeit zu versehen, beispielsweise dadurch, daß in Innenbereichen 122 und 124, die sich unmittelbar an die Schwenkachse 56 anschließen, eine höhere Luftdurchlässigkeit vorherrscht, als in sich an die Innenbereiche 122, 124 auf einer der Schwenkachse 56 gegenüberliegenden Seite anschließenden Außenbereichen 126, 128 des Windschottrahmeneinsatzes 60, so daß damit noch eine zusätzliche Anpassungsmöglichkeit besteht.

Bei dem zweiten Ausführungsbeispiel, dargestellt in Fig. 3 variiert somit die Luftdurchlässigkeit beispielsweise sprunghaft beim Übergang vom jeweiligen Innenbereich 112, 114 bzw. 122, 124 zum jeweiligen Außenbereich 116, 118 bzw. 126, 128.

Es ist aber auch denkbar, daß die Luftdurchlässigkeit graduell in der Querrichtung 110 variiert.

In diesem Fall ist die Luftdurchlässigkeit nicht als die Luftdurchlässigkeit bezogen auf die gesamten Abdeckungsrahmeneinsätze 88, 90 bzw. den Windschottrahmeneinsatz 60 zu sehen, sondern in diesem Fall bezogen auf eine Flächeneinheit in den jeweiligen Innenbereichen 112, 114 bzw. 122, 124 oder in den Außenbereichen 116, 118 bzw. 126, 128.

Eine derartige Variation der Luftdurchlässigkeit läßt sich in unterschiedlichster Weise erreichen.

Beispielsweise ist es denkbar, unterschiedliche Luftdurchlässigkeit durch unterschiedliche Auslegung der Maschen-, Wirk- oder Webware zu erreichen.

Es ist aber auch denkbar, ein zusätzliches Materialstück, auf den jeweiligen Bereich aufzulegen, um dadurch die Luftdurchlässigkeit in diesem Bereich zu reduzieren.

Weitere Möglichkeiten sind das Aufbringen von zusätzlichem Material auf eine durchgehende Maschen-, Wirk- oder Webware, beispielsweise durch Aufdrucken eines die Luftdurchlässigkeit reduzierenden Materials oder Aufkleben oder Aufnähen zusätzlicher die Luftdurchlässigkeit reduzierender Materialien.

Eine weitere Alternative zur Realisierung einer variierenden Luftdurchlässigkeit in der Querrichtung sieht vor, daß unterschiedliche Materialien zusammengenäht werden.

## Patentansprüche

1. Windstopeinrichtung, insbesondere für Cabrio-Fahrzeuge, umfassend ein sich über einer Gürtellinie (14) einer Karosserie (10) erhebendes Windschott (12) und eine mit dem Windschott (12) verbundene Abdeckung (16) für einen bezogen auf eine Fahrtrichtung (18) hinter dem Windschott (12) liegenden Teilbereich (20) einer Fahrgastraumöffnung (22) der Karosserie (10),
wobei das Windschott (12) eine Luftdurchlässigkeit aufweist, die größer ist als eine Luftdurchlässigkeit der luftdurchlässigen Abdeckung (16), wobei die Luftdurchlässigkeit des Windschotts (12) mindestens das Doppelte der Luftdurchlässigkeit der Abdeckung (16) beträgt und wobei die Luftdurchlässigkeit des Windschotts (12) maximal das Vierfache der Luftdurchlässigkeit der Abdeckung (16) beträgt.

2. Windstopeinrichtung nach Anspruch 1, **dadurch gekennzeichnet, dass** die Luftdurchlässigkeit des Windschotts (12) mindestens ungefähr 2,5-mal größer ist als die Luftdurchlässigkeit der Abdeckung (16).

3. Windstopeinrichtung nach einem der voranstehenden Ansprüche,
**dadurch gekennzeichnet, dass** die Luftdurchlässigkeit des Windschotts (12) ungefähr das Dreifache der Luftdurchlässigkeit der Abdeckung (16) beträgt.

4. Windstopeinrichtung nach einem der voranstehenden Ansprüche,
**dadurch gekennzeichnet, dass** die Luftdurchlässigkeit der Abdeckung (16) so groß ist, dass nach der Abdeckung (16) ein Luftstrom mit einer Geschwindigkeit zwischen ungefähr 0,5 m/s und ungefähr 2 m/s bei einer Anströmgeschwindigkeit der Luft von 10 m/s auf die Abdeckung (16) entsteht.

5. Windstopeinrichtung nach Anspruch 4, **dadurch gekennzeichnet, dass** die Luftdurchlässigkeit der Abdeckung (16) so groß ist, dass nach der Abdeckung (16) ein Luftstrom mit einer Geschwindigkeit zwischen ungefähr 0,75 m/s und ungefähr 1,7 m/s bei einer Anströmgeschwindigkeit der Luft von 10 m/s auf die Abdeckung (16) entsteht.

6. Windstopeinrichtung nach Anspruch 5, **dadurch gekennzeichnet, dass** die Luftdurchlässigkeit der Abdeckung (16) so groß ist, dass nach der Abdeckung (16) ein Luftstrom mit einer Geschwindigkeit zwischen ungefähr 1 m/s und ungefähr 1,5 m/s bei einer Anströmgeschwindigkeit der Luft von 10 m/s auf die Abdeckung (16) entsteht.

7. Windstopeinrichtung nach einem der voranstehenden Ansprüche,
**dadurch gekennzeichnet, dass** die Abdeckung (16) eine in einer quer zur Fahrtrichtung (18) verlaufenden Querrichtung (110) variierende Luftdurchlässigkeit aufweist.

8. Windstopeinrichtung nach Anspruch 7, **dadurch gekennzeichnet, dass** die Luftdurchlässigkeit symmetrisch zu einer in Fahrtrichtung (18) verlaufenden Längsmittelebene (77) variiert.

9. Windstopeinrichtung nach einem der voranstehenden Ansprüche,
**dadurch gekennzeichnet, dass** die Luftdurchlässigkeit in einem Innenbereich der Abdeckung (16) anders ist als in einem außerhalb des Innenbereichs (112, 114) liegenden Außenbereich (116, 118) der Abdeckung (16).

10. Windstopeinrichtung nach Anspruch 9, **dadurch gekennzeichnet, dass** die Luftdurchlässigkeit in dem Innenbereich (112, 114) geringer als in dem Außenbereich (116, 118) der Abdeckung (16) ist.

11. Windstopeinrichtung nach einem der voranstehenden Ansprüche,
**dadurch gekennzeichnet, dass** das Windschott (12) eine in einer quer zur Fahrtrichtung (18) verlaufenden Querrichtung (110) variierende Luftdurchlässigkeit aufweist.

12. Windstopeinrichtung nach Anspruch 11, **dadurch gekennzeichnet, dass** die Luftdurchlässigkeit symmetrisch zu einer in Fahrtrichtung (18) verlaufenden Längsmittelebene (77) variiert.

13. Windstopeinrichtung nach einem der voranstehenden Ansprüche,
**dadurch gekennzeichnet, dass** die Luftdurchlässigkeit in einem Innenbereich (122, 124) des Windschotts (12) anders ist als in einem außerhalb des Innenbereichs (122, 124) liegenden Außenbereich (126, 128) des Windschotts (12).

14. Windstopeinrichtung nach Anspruch 13, **dadurch gekennzeichnet, dass** die Luftdurchlässigkeit in dem Innenbereich (122, 124) größer als in dem Außenbereich (126, 128) des Windschotts (12) ist.

15. Windstopeinrichtung nach einem der voranstehenden Ansprüche,
**dadurch gekennzeichnet, dass** das Windschott (12) aus einem Windschottrahmen (50) und einem Windschottrahmeneinsatz (60) gebildet ist.

16. Windstopeinrichtung nach Anspruch 15, **dadurch gekennzeichnet, dass** der Windschottrahmeneinsatz (60) luftdurchlässig ausgebildet ist.

17. Windstopeinrichtung nach Anspruch 16, **dadurch gekennzeichnet, dass** der Windschottrahmeneinsatz (60) aus einem biegeschlaffen Flachmaterial gebildet ist.

18. Windstopeinrichtung nach Anspruch 17, **dadurch gekennzeichnet, dass** das biegeschlaffe Flachmaterial (60) in den Windschottrahmen (50) eingespannt ist.

19. Windstopeinrichtung nach einem der voranstehenden Ansprüche,
**dadurch gekennzeichnet, dass** die Abdeckung (16) aus mindestens einem Abdeckungsrahmen (80, 82) und einem Abdeckungsrahmeneinsatz (88, 90) gebildet ist.

20. Windstopeinrichtung nach Anspruch 19, **dadurch gekennzeichnet, dass** der Abdeckungsrahmeneinsatz (88, 90) luftdurchlässig ausgebildet ist.

21. Windstopeinrichtung nach Anspruch 20, **dadurch gekennzeichnet, dass** der Abdeckungsrahmeneinsatz (88, 90) aus einem biegeschlaffen Flachmaterial gebildet ist.

22. Windstopeinrichtung nach Anspruch 21, **dadurch gekennzeichnet, dass** das biegeschlaffe Flachmaterial (88, 90) in den Abdeckungsrahmen (80, 82) eingespannt ist.

23. Windstopeinrichtung nach einem der voranstehenden Ansprüche,
**dadurch gekennzeichnet, dass** das Windschott (12) aus zwei Windschottteilen (52, 54) gebildet ist, die ihrerseits um eine Schwenkachse (56) von einer ausgebreiteten Stellung, in welcher sich das Windschott mit maximaler Ausdehnung in einer Ausbreitungsrichtung erstreckt, in eine zusammengeklappte Stellung bringbar ist, in welcher die beiden Windschottteile (52, 54) im Wesentlichen aufeinander liegen und dass die Abdeckung (16) durch zwei Abdeckungsteile (72, 74) gebildet ist.

## Claims

1. Wind stop device, in particular, for convertible vehicles, comprising a wind blocker (12) rising above a belt line (14) of a body (10), and a cover (16) connected to the wind blocker (12) for an area (20), located behind the wind blocker (12) in relation to a direction of travel (18), of a passenger compartment opening (22) of the body (10), the wind blocker (12) having an air permeability which is greater than an air permeability of the air-permeable cover (16), the air permeability of the wind blocker (12) being at least twice the air permeability of the cover (16), and the air permeability of the wind blocker (12) being at maximum four times the air permeability of the cover (16).

2. Wind stop device in accordance with claim 1, **characterized in that** the air permeability of the wind blocker (12) is at least approximately 2.5 times the air permeability of the cover (16).

3. Wind stop device in accordance with any one of the preceding claims, **characterized in that** the air permeability of the wind blocker (12) is approximately three times the air permeability of the cover (16).

4. Wind stop device in accordance with any one of the preceding claims, **characterized in that** the air permeability of the cover (16) is of such size that at an approach velocity of the air of 10 m/s towards the cover (16) an air current with a velocity of between approximately 0.5 m/s and approximately 2 m/s results after the cover (16).

5. Wind stop device in accordance with claim 4, **characterized in that** the air permeability of the cover (16) is of such size that at an approach velocity of the air of 10 m/s towards the cover (16) an air current with a velocity of between approximately 0.75 m/s and approximately 1.7 m/s results after the cover (16).

6. Wind stop device in accordance with claim 5, **characterized in that** the air permeability of the cover (16) is of such size that at an approach velocity of the air of 10 m/s towards the cover (16) an air current with a velocity of between approximately 1 m/s and approximately 1.5 m/s results after the cover (16).

7. Wind stop device in accordance with any one of the preceding claims, **characterized in that** the cover (16) has an air permeability which varies in a transverse direction (110) extending transversely to the direction of travel (18).

8. Wind stop device in accordance with claim 7, **characterized in that** the air permeability varies symmetrically in relation to a longitudinal center plane (77) extending in the direction of travel (18).

9. Wind stop device in accordance with any one of the preceding claims, **characterized in that** the air permeability in an inner area of the cover (16) is different than in an outer area (116, 118) of the cover (16) that lies outside of the inner area (112, 114).

10. Wind stop device in accordance with claim 9, **characterized in that** the air permeability in the inner area (112, 114) is lower than in the outer area (116, 118) of the cover (16).

11. Wind stop device in accordance with any one of the preceding claims, **characterized in that** the wind blocker (12) has an air permeability which varies in a transverse direction (110) extending transversely to the direction of travel (18).

12. Wind stop device in accordance with claim 11, **characterized in that** the air permeability varies symmetrically in relation to a longitudinal center plane (77) extending in the direction of travel (18).

13. Wind stop device in accordance with any one of the preceding claims, **characterized in that** the air permeability in an inner area (122, 124) of the wind blocker (12) is different than in an outer area (126, 128) of the wind blocker (12) that lies outside of the inner area (122, 124).

14. Wind stop device in accordance with claim 13, **characterized in that** the air permeability in the inner area (122, 124) is greater than in the outer area (126, 128) of the wind blocker (12).

15. Wind stop device in accordance with any one of the preceding claims, **characterized in that** the wind blocker (12) is formed by a wind blocker frame (50) and a wind blocker frame insert (60).

16. Wind stop device in accordance with claim 15, **characterized in that** the wind blocker frame insert (60) is of air-permeable design.

17. Wind stop device in accordance with claim 16, **characterized in that** the wind blocker frame insert (60) is formed from a flat material having a slackness that allows it to be bent.

18. Wind stop device in accordance with claim 17, **characterized in that** the flat material (60) having a slackness that allows it to be bent is clamped in the wind blocker frame (50).

19. Wind stop device in accordance with any one of the preceding claims, **characterized in that** the cover (16) is formed by at least one cover frame (80, 82) and a cover frame insert (88, 90).

20. Wind stop device in accordance with claim 19, **characterized in that** the cover frame insert (88, 90) is of air-permeable design.

21. Wind stop device in accordance with claim 20, **characterized in that** the cover frame insert (88, 90) is formed from a flat material having a slackness that allows it to be bent.

22. Wind stop device in accordance with claim 21, **characterized in that** the flat material (88, 90) having a slackness that allows it to be bent is clamped in the cover frame (80, 82).

23. Wind stop device in accordance with any one of the preceding claims, **characterized in that** the wind blocker (12) is formed by two wind blocker parts (52, 54) which, in turn, are adapted to be brought about a pivot axis (56) from a extended position in which the wind blocker extends with a maximum extent in a direction of extension into a folded position in which the two wind blocker parts (52, 54) lie substantially on top of each other, and **in that** the cover (16) is formed by two cover parts (72, 74).

## Revendications

1. Dispositif coupe-vent, notamment pour des cabriolets, comprenant une cloison coupe-vent (12) s'élevant au-dessus d'une ceinture de caisse (14) d'une carrosserie (10) et une capote (16) reliée à la cloison coupe-vent (12), pour une zone partielle (20) d'une ouverture d'habitacle (22) de la carrosserie (10), située derrière la cloison coupe-vent (12), par rapport à un sens de déplacement (18),
la cloison coupe-vent (12) faisant preuve d'une perméabilité à l'air qui est supérieure à une perméabilité à l'air de la capote (16) perméable à l'air, la perméabilité à l'air de la cloison coupe-vent (12) correspondant au moins au double de la perméabilité à l'air de la capote (16), et la perméabilité à l'air de la cloison coupe-vent (12) correspondant au maximum au quadruple de la perméabilité à l'air de la capote (16).

2. Dispositif coupe-vent selon la revendication 1, **caractérisé en ce que** la perméabilité à l'air de la cloison coupe-vent (12) est au moins approximativement supérieure de 2,5 fois à la perméabilité à l'air de la capote (16).

3. Dispositif coupe-vent selon l'une quelconque des revendications précédentes, **caractérisé en ce que** la perméabilité à l'air de la cloison coupe-vent (12) correspond à environ le triple de la perméabilité à l'air de la capote (16).

4. Dispositif coupe-vent selon l'une quelconque des revendications précédentes, **caractérisé en ce que** la perméabilité à l'air de la capote (16) est assez importante, pour donner naissance, après la capote (16), à un courant d'air d'une vitesse comprise entre environ 0,5 m/s et environ 2 m/s, pour une vitesse d'arrivée de l'air de 10 m/s sur la capote (16).

5. Dispositif coupe-vent selon la revendication 4, **caractérisé en ce que** la perméabilité à l'air de la capote (16) est assez importante, pour donner naissance, après la capote (16), à un courant d'air avec une vitesse comprise entre environ 0,75 m/s et environ 1,7 m/s, pour une vitesse d'arrivée de l'air de 10 m/s sur la capote (16).

6. Dispositif coupe-vent selon la revendication 5, **caractérisé en ce que** la perméabilité à l'air de la capote (16) est assez importante pour donner naissance, après la capote (16), à un courant d'air d'une vitesse comprise entre environ 1 m/s et environ 1,5 m/s, pour une vitesse d'arrivée de l'air de 10 m/s sur la capote (16).

7. Dispositif coupe-vent selon l'une quelconque des revendications précédentes, **caractérisé en ce que** la capote (16) présente une perméabilité à l'air variant dans une direction transversale (110) s'étendant transversalement au sens de conduite (18).

8. Dispositif coupe-vent selon la revendication 7, **caractérisé en ce que** la perméabilité à l'air varie de façon symétrique à un plan médian longitudinal (77) s'étendant suivant le sens de conduite (18).

9. Dispositif coupe-vent selon l'une quelconque des revendications précédentes, **caractérisé en ce que** la perméabilité à l'air dans une zone intérieure de la capote (16) est différente de celle dans une zone extérieure (116, 118) se situant à l'extérieur de la zone intérieure (112, 114) de la capote (16).

10. Dispositif coupe-vent selon la revendication 9, **caractérisé en ce que** la perméabilité à l'air dans la zone intérieure (112, 114) est plus faible que dans la zone extérieure (116, 118) de la capote (16).

11. Dispositif coupe-vent selon l'une quelconque des revendications précédentes, **caractérisé en ce que** la cloison coupe-vent (12) fait preuve d'une perméabilité à l'air variant dans une direction transversale (110) s'étendant transversalement au sens de conduite (18).

12. Dispositif coupe-vent selon la revendication 11, **caractérisé en ce que** la perméabilité à l'air varie de façon symétrique à un plan médian longitudinal (77) s'étendant suivant le sens de conduite (18).

13. Dispositif coupe-vent selon l'une quelconque des revendications précédentes, **caractérisé en ce que** la perméabilité à l'air est différente dans une zone intérieure (122, 124) de la cloison coupe-vent (12) de celle dans une zone extérieure (126, 128) située à l'extérieur de la zone intérieure (122, 124) de la cloison coupe-vent (12).

14. Dispositif coupe-vent selon la revendication 13, **caractérisé en ce que** la perméabilité à l'air dans la zone intérieure (122, 124) est supérieure à celle dans la zone extérieure (126, 128) de la cloison coupe-vent (12).

15. Dispositif coupe-vent selon l'une quelconque des revendications précédentes, **caractérisé en ce que** la cloison coupe-vent (12) est formée d'un cadre de cloison coupe-vent (50) et d'un insert de cadre de cloison coupe-vent (60).

16. Dispositif coupe-vent selon la revendication 15, **caractérisé en ce que** l'insert de cadre de cloison coupe-vent (60) est conçu pour être perméable à l'air.

17. Dispositif coupe-vent selon la revendication 16, **caractérisé en ce que** l'insert de cadre de cloison coupe-vent (60) est formé dans une matière plate relâchée à la flexion.

18. Dispositif coupe-vent selon la revendication 17, **caractérisé en ce que** la matière relâchée à la flexion (60) est tendue dans le cadre de la cloison coupe-vent (50).

19. Dispositif coupe-vent selon l'une quelconque des revendications précédentes, **caractérisé en ce que** la capote (16) est formée au moins d'un cadre de capote (80, 82) et d'un insert de cadre de capote (88, 90).

20. Dispositif coupe-vent selon la revendication 19, **caractérisé en ce que** l'insert de cadre de capote (88, 90) est conçu pour être perméable à l'air.

21. Dispositif coupe-vent selon la revendication 20, **caractérisé en ce que** l'insert de cadre de capote (88, 90) est formé dans une matière relâchée à la flexion.

22. Dispositif coupe-vent selon la revendication 21, **caractérisé en ce que** la matière relâchée à la flexion (88, 90) est tendue dans le cadre de capote (80, 82).

23. Dispositif coupe-vent selon l'une quelconque des revendications précédentes, **caractérisé en ce que** la cloison coupe-vent (12) est formée de deux éléments de cloison coupe-vent (52, 54) qui pour leur part, autour d'un axe de pivotement (56) peuvent être amenés d'une position étalée, dans laquelle la cloison coupe-vent s'étend avec une extension maximale dans un sens d'étalement, dans une position escamotée, dans laquelle les deux éléments de cloison coupe-vent (52, 54) sont sensiblement superposés, et **en ce que** la capote (16) est formée de deux éléments de capote (72, 74).
